Europäisches Patentamt

(19) European Patent Office

Office européen des brevets

(11) Publication number: **0 254 467 B1**

(12) EUROPEAN PATENT SPECIFICATION

(45) Date of publication of patent specification: **27.10.93**

(51) Int. Cl.⁵: **C08F 2/18**, C08F 285/00, C08F 8/44, C08F 2/22, C08F 265/00, C08F 291/00

(21) Application number: **87306201.2**

(22) Date of filing: **14.07.87**

(54) **Sequentially-produced polymer particles, aqueous dispersions of sequentially-produced polymer particles, processes for preparing sequentially-produced polymer particles, and uses of sequentially-produced polymer particles.**

(30) Priority: **14.07.86 US 885069**

(43) Date of publication of application:
**27.01.88 Bulletin 88/04**

(45) Publication of the grant of the patent:
**27.10.93 Bulletin 93/43**

(84) Designated Contracting States:
**AT BE CH DE ES FR GB GR IT LI LU NL SE**

(56) References cited:
**EP-A- 0 031 964**
**EP-A- 0 073 529**
**GB-A- 847 603**
**US-A- 3 282 876**
**US-A- 4 151 143**

(73) Proprietor: **ROHM AND HAAS COMPANY**
**Independence Mall West**
**Philadelphia Pennsylvania 19105(US)**

(72) Inventor: **Kowalski, Alexander**
**2519 Butler Pike**
**Plymouth Meeting Pennsylvania 19462(US)**
Inventor: **Wilczynski, Joseph John**
**20775 La Rambla**
**Yorba Linda California 92686(US)**
Inventor: **Blankenship, Robert Mitchell**
**520 West Mt. Vernon St.**
**Lansdale Pennsylvania 19446(US)**
Inventor: **Chou, Chuen-Shyong**
**1409 Glen Echo Lane**
**Dresher Pennsylvania 19025(US)**

(74) Representative: **Angell, David Whilton et al**
**ROHM AND HAAS (UK) LTD.**
**European Operations Patent Department**
**Lennig House**
**2 Mason's Avenue**
**Croydon CR9 3NB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention is concerned with sequentially-produced polymer particles, aqueous dispersions of sequentially-produced polymer particles, processes for preparing sequentially-produced polymer particles, and uses of sequentially-produced polymer particles. The sequentially-produced polymer particles of the present invention are especially, though not exclusively, useful in aqueous binder, coating and adhesive compositions.

Film forming, generally spherical core-sheath or core-shell polymer particles are very well known. Such particles, in aqueous dispersion, have been used as rheology modifiers, generally with a thickener, for example hydroxy ethyl cellulose, or other synthetic rheology modifier to provide sufficient film build and ICI viscosity, in binder, coating and adhesive compositions. It is an object of the present invention to provide polymer particles which, when used in aqueous binder, coating or adhesive compositions, contribute sufficient film build and ICI viscosity to the compositions, that the amount of thickener or other synthetic rheology modifier required in the composition is reduced or eliminated.

Contrary to conventional technology, the particles of this invention are not core-shell or core-sheath or even spherical.

Bumpy, lumpy, or "raspberry" like polymer particles may sometimes be present in conventional aqueous polymer dispersions. Furthermore, dispersions of conventional spherical particles sometimes aggregate to form clusters which tend to fuse into elliptical or dumbbell-shaped particles. However, the polymer particles of the present invention are quite different in structure and behave differently in binder, coating, or adhesive compositions.

One prolific group at Kobe University, led by Masayoshi Okubo, has published many articles over the last twelve years in the field of suspension and emulsion polymerization, and has been especially interested in what they refer to as anomalous and peculiar morphology. See for example Journal of Polymer Science: Polymer Letters Edition, Vol. 20, 45-51 (1982), and Vol. 19, 143 (1981). While some of the Kobe articles show what appear to be particles having similar structure to the particles of the present invention, upon closer study we believe the Kobe group is growing hard second stage particles, e.g. styrene, within a continuous soft first stage, e.g. butyl acrylate, to form particles having a bumpy core surrounded by a spherical shell. These particles are quite different in structure from the particles of the present invention. However, since butyl acrylate is transparent to an electron beam, transmission electron microscopy photos of unhardened Kobe particles show a bumpy morphology rather than spherical. The spherical morphology of the Kobe particles can be viewed by optical microscope and, after hardening of the particles, by electron microscope. Certainly the Kobe particles would not be as useful as the particles of the present invention in providing high film build coating binders or high wet tack adhesives. The Kobe materials are prepared by a process which is different from the process of the present invention.

Another object of the invention is to provide dispersions of polymer particles for binders, coatings, and adhesives which may have improved film build at a fixed solids level, or a lower solids requirement at a fixed film build.

With respect to adhesives, an object is to provide improved wet tack.

According to a first aspect of the present invention we provide a sequentially produced polymer particle comprising a polymeric core having at least two polymeric lobes borne thereon, wherein the polymeric core has a composition which is different and thermodynamically incompatible with the composition of the polymeric lobes and wherein the polymeric core composition and the composition of the polymeric lobes have an interaction parameter $X_{C-L}$ with each other of equal to or greater than 0.05, and wherein the weight ratio of the total lobes to core is at least or greater than 1 and wherein the particle is obtainable by polymerising a lobe monomer system in the presence of a polymeric core particle and surfactant, and increasing the level of surfactant added with lobe forming monomer to just below the level at which new particles are initiated.

According to a second aspect of the present invention we provide a process for preparing a particle according to the first aspect of the present invention comprising polymerising a lobe monomer system in the presence of a polymeric core particle and surfactant, and increasing the level of surfactant added with lobe forming monomer to just below the level at which new particles are initiated.

In accordance with another aspect of the present invention we provide an aqueous dispersion of sequentially-produced polymer particles as defined above.

The polymer particles of the present invention have a core bearing at least two lobes. These lobes are generally observable with an optical microscope. The lobes are also observable with electron microscopy and, as distinguished from the prior art, are observable by scanning electron microscopy after treatment with ruthenium tetraoxide.

2

The polymer particles of the present invention preferably comprise a polymeric core which swells upon neutralization.

The lobes are polymerized from a lobe-forming monomer system which is different from the core monomer system. The difference between the two monomer systems is such that they form polymers which are thermodynamically incompatible and have an interaction parameter, $X_{C-L}$, with each other of equal to or greater than 0.05.

The core is usually prepared first and may itself be grown out on a seed or preform which may be the same or different composition and may be used primarily for control of particle size. The composition of the core is one of the main factors controlling lobe formation. Suitable core monomer systems preferably contain 5% or more of monoethylenically unsaturated monomers which contain one or more functional groups chosen from the following: carboxylic acid, carboxylic acid anhydride, hydroxyl, amide, hydroxyethyl, hydroxypropyl, dihydroxypropyl, hydroxybutyl, ureido, ethylene ureido, hydroxyamide, nitrile, methylolamide, glycidyl, cyanoethyl, N-(isobutoxy methyl) amido, diacetoneamido, N,N-dimethylamido, ethoxy ethyl, ethoxy ethoxy ethyl, furfuryl, aldehyde, phosphate, polyethyleneglycol, polypropylene glycol, sorbitol, glycerol and silane, with one or more nonionic or nonfunctional monomers. Preferred core monomer systems have about 1 to 100% carboxylic acid functional monomer(s), more preferably about 20 to 50%, even more preferably 20% to 40%, and most preferably about 30 to 40%, by weight.

Suitable carboxylic acid monomers include methacrylic acid, acrylic acid, acryloxy propionic acid, methacryloxypropionic acid, acryloxyacetic acid, methacryloxy acetic acid, and monomethyl acid itaconate.

Examples of nonionic or nonfunctional monomers are $C_1$-$C_{18}$ acrylates or methacrylates, vinyl esters, for example vinyl acetate, vinyl ethers, vinyl chloride, vinylidene chloride, styrene, substituted styrenes, butadiene, and ethylene. With vinyl acetate, methyl acrylate and other monomers which are relatively water soluble but whose polymers are water insoluble but water plasticized, less than 5% functional monomer may be effective. Homopolymers of vinyl acetate, methyl acrylate and other similar monomers are themselves effective first stages in providing particle formation. Examples of similar monomers are methoxy methyl acrylate or methacrylate, cellosolve acrylate or methacrylate, carbitol acrylate or methacrylate, N-vinyl pyrrolidone, hydroxyethyl acrylate or methacrylate, and hydroxypropyl acrylate or methacrylate.

The core polymer system first stage may also preferably contain a small amount of a polyethylenically unsaturated crosslinking monomer such as ethylene glycol dimethacrylate, allyl methacrylate, 1,3-butanediol dimethacrylate, diethylene glycol dimethacrylate, trimethylolpropane trimethacrylate, or divinylbenzene, in a proportion of 0.1% to 10%, preferably 0.1% to about 3% by weight, based on the first stage weight.

Water insoluble copolymers of nonionic monoethylenically unsaturated monomers with 1% or more of monoethylenically unsaturated monomers containing a strong anionic functional group such as a sulfur oxy acidor a phosphorous oxy acid can also be used as the central core polymer. Examples of monomers containing such strong functional groups are: sodium allyl sulfonate sodium methallyl sulfonate, sodium styrene sulfonate, sodium vinyl sulfonate, sodium sulfoethyl methacrylate, phosphoethyl methacrylate, bis-(methacryloxyethyl) phosphate, and also acrylate analogs of the methacrylates.

The compositions of the core and lobe polymers must be different and thermodynamically incompatible. The compositions vary to the extent that the interaction parameter, $X_{C-L}$, is at least 0.05. (The X stands for chi.) The interaction parameter can be calculated for the lobe and core polymers by the method of Krause et al., J. Chem. Physics, 43, 2144 (1965). Appropriate values of the Hildebrand solubility values necessary for the calculation may be found in Van Krevelen, "Properties of Polymers," Elsevier Publishers (New York), 1976.

One or more monomers selected from the following are preferred for the lobe monomer system: butyl acrylate (BA), methyl methacrylate (MMA), ethyl acrylate (EA), 2-ethyl hexyl acrylate (2-EHA), styrene (S), vinyl acetate (VA), acrylic acid (AA), methacrylic acid (MAA), isobornyl methacrylate (IBMA), ethylene (E), vinyl chloride (VCL), acrylonitrile (AN), isobutyl acrylate (IBA), butadiene (Bd), p-methyl styrene (PMS), and vinyl toluene (VT),

The weight ratio of polymeric lobes to total polymeric core is greater than 1:1. Preferably the weight ratio of polymeric core to total polymeric lobes is at least 1:2 and more preferably at least 1:5. Preferably the weight ratio of polymeric core to total polymeric lobes is not more than 1:500, and more preferably no more than 1:200.

The core glass transition temperature, Tg, is preferably at least 5°C, more preferably above 15°C and even more preferably at least 100°C.

The central core is preferably about 0.05 $\mu$m to 1.5 $\mu$m more preferably about 0.05 $\mu$m to 1.0 $\mu$m. The final diameter of the particles of the present invention is best determined by the diameter a sphere of equivalent volume would have.

The useful particle size range is given below assuming core/final volume ratios to range from 1/1 to 1/200, although ratios up to 1/500 are useful.

| Diameter, $\mu$m | Diameter Final, $\mu$m | |
|---|---|---|
| Core | 1/1 | 1/200 |
| .07 | .088 | 0.41 |
| 1.0 | 1.26 | 5.86 |

With a larger particle size we generally use a smaller growout volume increase of 50X, thus for a 2.0 $\mu$m core we obtain a final spherical equivalent particle diameter of 7.4 $\mu$m, If the core is swellable upon neutralization, a substantial further increase in particle volume and diameter is accordingly obtained.

Another aspect of the present invention is a process for preparing sequentially-produced polymer particles as defined above, said process comprising polymerising a lobe monomer system in the presence of polymeric core particles and surfactant, and increasing the level of surfactant added with lobe forming monomer to just below the level at which new particles are initiated.

Whilst it is believed the level of surfactant required in the process of the present invention would be readily determinable by the skilled man, it being well known in the art to use surfactant to stabilize the polymer-water interface of emulsion polymer particles, a description of a technique to prevent coagulation is given in US-A-2520959. This reference shows how to calculate a surfactant concentration range based on polymer particle surface area so as to prevent coagulation but not exceed the surfactant concentration at which new particles are formed. A similar logic may be employed to provide a surfactant concentration range which may be used during the early part of the process of the present invention to aid in lobe formation and stabilize the lobe-water interface without forming new particles. The specific surfactant concentration range employed in the process of the present invention may vary with different surfactants and with different lobe and different core polymer compositions. It is preferred to increase the surfactant level as the process proceeds to maintain the desired number and quality of the lobes, with the upper limit of surfactant concentration being the level at which an excessive number of new particles form.

Preferably at least 10%, more preferably at least 20% and even more preferably at least 30%, of the solids formed in the process of the present invention are particles comprising a core bearing at least two lobes.

A two stage gradual addition polymerization is preferred. The core is formed first, and may be formed on a seed or preform used to control particle nucleation (thus number and size) which may be of different composition.

The core may be formed in situ, as a first stage in the process, or it may be made separately and added.

The polymers are preferably made by aqueous emulsion polymerization. Less preferred methods to prepare core polymer are by nonaqueous dispersion or precipitation polymerization or by conversion of an organic solvent solution polymer to an aqueous dispersion.

The lobes may be formed by stating gradual addition feed of the appropriate lobe-forming monomer system in the presence of sufficient surfactant and then continuing the feed either at the same but often at an increased rate of addition to completion. We have found it in some cases advantageous to add an initial small increment of monomer or monomer emulsion to the kettle charge and this has been substituted for in other cases by a small increment of nonpolymerizable organic solvent such as Texanol.

Any free radical initiator useful in emulsion polymerization may be suitable for the formation of particles of the present invention. We prefer the use of redox initiator systems of a persulfate oxidizing agent along with a bisulfite or sulfoxylate formaldehyde reducing agent. We especially prefer the use of an initial increment of the redox couple or of a reducing agent alone prior to introducing lobe-forming monomer system, followed by gradual addition of the redox couple simultaneously with the monomer feed as polymerization proceeds. An addition of a small amount of transition metal salt as ferrous sulfate hepta hydrate is often beneficial. This initiation procedure is unusual and, in combination with the surfactant procedure, distinguishes many embodiments of this invention from prior processes. Some embodiments do not require this initiation procedure.

Examples of initiators are based on thermal decomposition of sodium and ammonium persulfate and on redox reaction of these persulfates and t-butyl hydroperoxide with sodium sulfoxylate formaldehyde and sodium bisulfite as reducing agents. Also suitable are benzoyl peroxide and 4,4'-azo bis(4 cyanovaleric acid) as sources of free radicals.

4

Polymerization temperatures of about 15°C to 125°C are suitable, preferably 60°C to 85°C, and more preferably 75°C to 85°C.

Anionic surfactants such as ammonium salt of sulfated nonylphenoxy poly(ethyleneoxy) ethanol (Alipal CO-436), sodium dodecylbenzene sulfonate (Siponate DS-4), and sodium dodecyl diphenyloxide disulfonate (Dowfax 2A-1) are the most preferred, although most other anionic surfactants which are useful in emulsion polymerization should be suitable for preparing the particles of the present invention. Nonionic surfactants in combination with anionics are also effective.

The preferred surfactant level is about 0.1% to 5% by weight on total monomer. For certain systems, about 0.4 to 0.7% is optimal. The use of sufficient surfactant to maintain the lobe structure during the process, preferably continually added during the addition of the lobe-forming monomer system, is most preferred.

In conventional multiple stage emulsion polymerization processes where it is desired to avoid initiation of additional particles with second stage addition, the skilled artisan minimizes the level of surfactant at the point of second stage monomer feed. Contrary to conventional practice, we increase the level of surfactant added with lobe-forming monomer to just below the level at which new particles are initiated. This increased level of surfactant, in combination with the initiation procedure and monomer compositions, causes lobe formation on the core. Sufficient surfactant is added with the entire lobe-forming monomer feed to maintain the lobes until completion of the process.

Higher levels of surfactant within the range are desirable for smaller particle size lobe initiation and maintenance. Polymerizable surfactants appear to be very effective in stabilizing lobe formation and so are preferred. Strong acid-group-containing monomers are effective in lobe stabilization and to replace conventional surfactant.

Preparation of particle dispersions with large lobe fractions (>25) and at high solids level under the conditions of this invention occurs readily with, for example, copolymers of butyl acrylate and methyl methacrylate with methyl methacrylate levels of about 60% or less (Tg of about 32°C or less) or with copolymers of most of the other monomers listed of comparable Tg.

The number of lobes bearing on the core appears to depend upon the particular composition of the lobes. For example, Table 1 shows how the number (X) of lobes being on the core differs for various lobe compositions on the same core.

In some cases lobe monomer systems, e.g., BA/St, do not form lobes directly, but must be preceded by a composition which forms lobes readily. Examples are given in Table 2.

Preparation of a particle with polystyrene lobes does not occur readily with small particle size (0.1 $\mu$m to 0.2 $\mu$m diameter) cores, but can be carried out readily with a 1 $\mu$m first stage of the same composition (Example 8).

The preferred weight ratio of lobe polymer to core ranges from greater than 1/1 to about 200/1. Lobes are frequently observed forming at 10% to 25% into the polymerization process. Our efforts have been to prepare materials at high solids and maintain the lobe structure throughout the process.

Yet another aspect of the present invention is the use of sequentially-produced polymer particles in binder, coating or adhesive compositions. A list of polymer compositions which may be useful is given in Table 3.

## Table 1

### Lobe Composition

| Lobe Composition | Lobe Content or Multiplicity |
|---|---|
| 51.9 BA/46.8 MMA/1.3 AA | 90% 4X, 10% 3X |
| 46 BA/52.7 MMA/1.3 AA | >85% 3X and 4X |
| 59.6 BA/39.1 MMA/1.3 AA | >85% 3X and 4X |
| 70 BA/28.7 MMA/12.3 AA | 90% 2X |
| 80 BA/18 MMA/2 MAA | 90% 2X |
| 49 EA/49 2-EHA/2 AA | 80% 3X and 4X |
| 49 EA/29 BA/22 2-EHA/2 AA | 50% 3X and 4X |
| 73 EA/25 2-EHA/2 AA | 80% 3X and 4X |
| 39 EA/66 2-EHA/1 MAA | 90% 3X and 4X |
| 50 BA/48.7 S/1.3 AA | Some 2X and 4X |
| 95 BA/3.7 MMA/1.3 AA | Most 3X |
| 10 VA + 90 (60 BA/36.7 MMA/1.3 AA) | Several |

## Table 2

### Two Stage Lobe Compositions

| | Lobe Composition | Lobe Content or Multiplicity |
|---|---|---|
| 1. | 20% (51.9 BA/46.8 MMA/1.3 AA) <br> + <br> 80% (50 BA/48.75 S/1.3 AA) | 70% |
| 2. | 20% (52 BA/46.7 MMA/1.3 AA) <br> + <br> 80% (98 IBMA/2 AA) | 90% 3X |
| 3. | 20% (51.9 BA/46.8 MMA/1.3 AA) + <br> 80% (polystyrene) | 3X - 4X |

## Table 3

### Compositions and Uses

| Polymer Type | Polymers or Copolymers of | Use |
|---|---|---|
| Soft | Butyl acrylate, isobutyl acrylate 2-ethylhexyl acrylate, ethyl acrylate | Adhesives Caulks Roof Mastics |
| Ambient Temperature Film Formers | Butyl acrylate, ethyl acrylate, methyl acrylate, isobutyl acrylate with methyl methacrylate, styrene, acrylonitrile, vinylacetate, vinyl chloride. Also copolymers of vinyl acetate with vinyl chloride, ethylene. | Vehicles for clear and/or pigmented coatings. |

7

### Table 3 con.

| Hard, Thermoplastic Film Formers | Copolymers of methyl methacrylate, butyl meth-acrylate, styrene, acrylonitrile; vinyl chloride with butyl acrylate or other plasticizing monomers. | Coatings which are baked. |
|---|---|---|
| Crosslinkable Film Formers | Copolymers of the above compositions which in addition contain one or more functional groups which react upon heating or catalysis or irradiation to crosslink the polymer. | Curable coatings. |

| Polymer Type | Polymers or Copolymers of | Use |
|---|---|---|
| Hard and/or Crosslinked | Polymers or copolymers of monomers with a single un-saturated group and also monomers with multiple unsaturation as divinyl benzene butadiene and butanediol dimethacrylate. | Rubbers -- fillers spacers, extenders. |

The invention is now illustrated with reference to the following figures, in which:

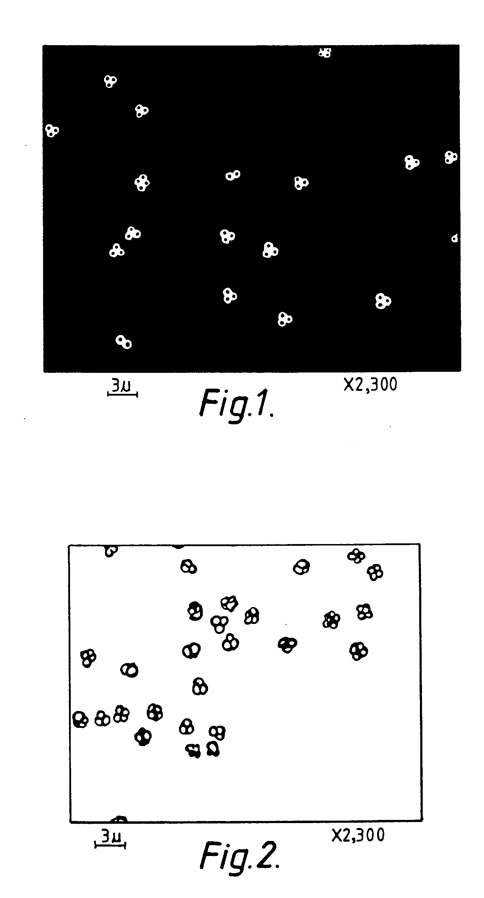

Figure 1 is a photograph showing the appearance under optical microscope on a dark field of a particle dispersion made in accordance with the invention, prior to swelling.

Figure 2 is a photograph of a particle dispersion made in accordance with the invention taken under optical microscope on a bright field.

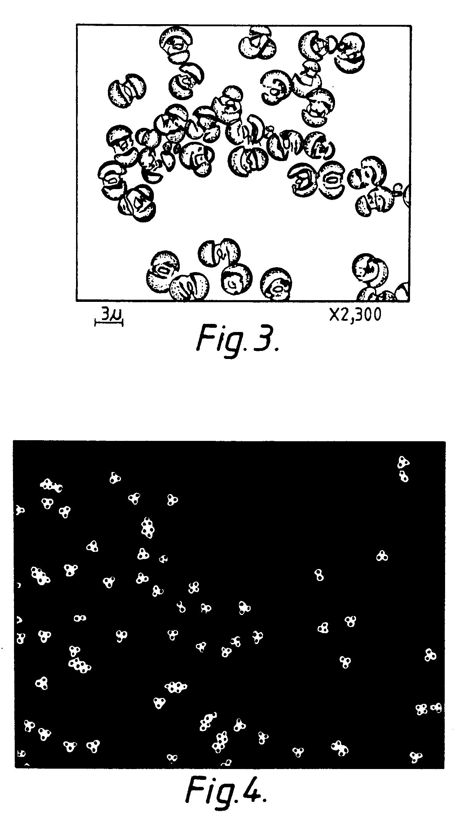

Figure 3 is a photograph of the appearance of particle dispersion made in accordance with the invention and neutralized with ammonia at 85 °C taken under optical microscope on a bright field.

Figure 4 is the same as Figure 1 except at a lower light intensity.

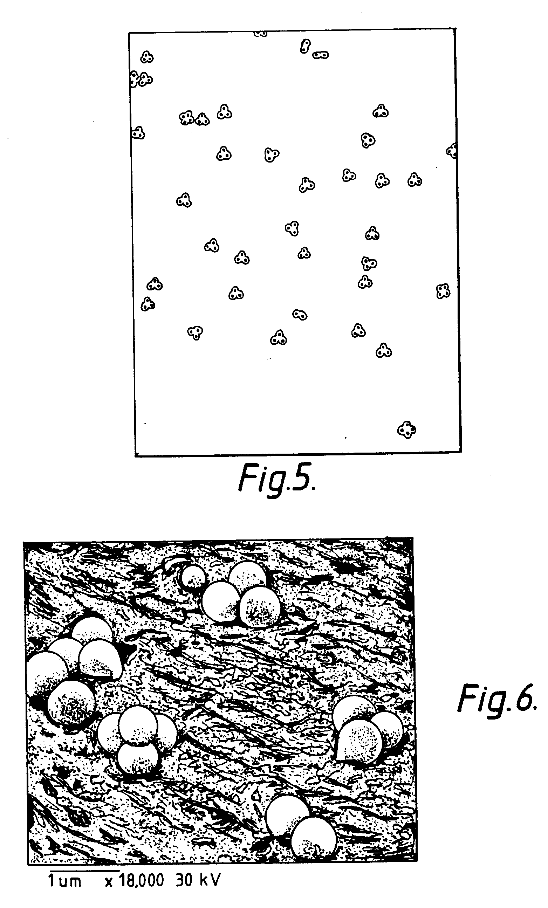

Figure 5 is similar to Figure 2 except with smaller particles.

Figure 6 is a scanning electron microscope photo of the invention.

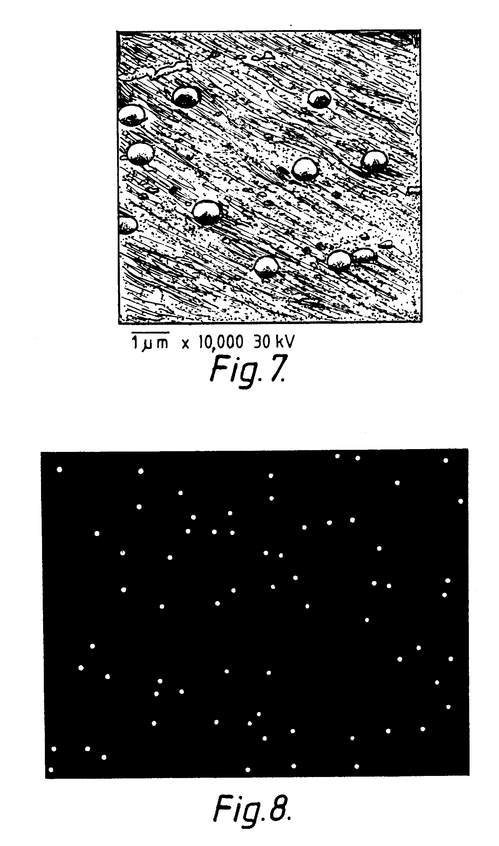

Figure 7 is a comparative scanning electron microscope of a sample made in accordance with the Kobe articles.

Figure 8 is a comparative photo showing the Kobe sample under optical microscope.

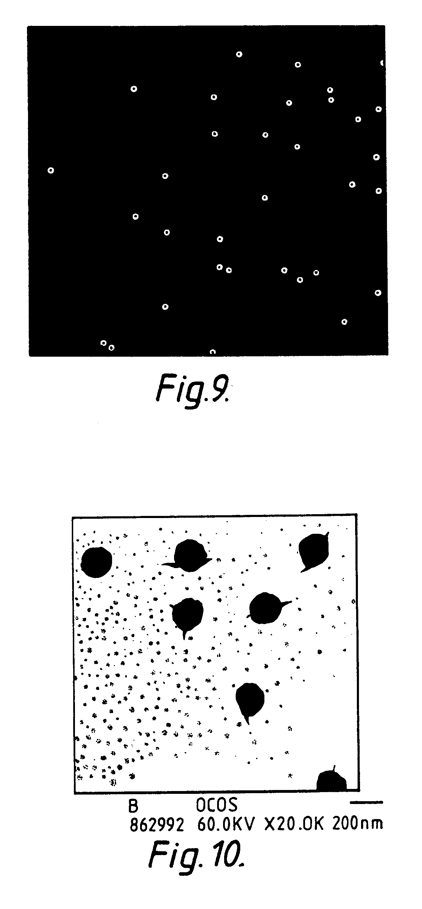

Figure 9 is a comparative photo showing a standard spherical particle dispersion under optical microscope.

Figure 10 is a comparative photo of the Kobe sample under transmission electron microscope, hardened and stained with octadiene/osmium solution.

The following examples are presented to illustrate a few different embodiments of the invention, but the invention should not be considered as limited thereto.

Examples

Example 1 - Sequentially-Produced Polymer Particle Paint Vehicles

A. Core Polymer

Reactor: 5 liter glass flask with stirrer, thermometer, nitrogen inlet, reflux condenser and heating mantle.

The reactor is charged with 2400 gm deionised water and 1.39 g of the ammonium salt of sulfated nonylphenoxy poly(ethyleneoxy) ethanol (4 ethylene oxide) (Alipal CO-436 brand) and heated to 85°C while being flushed with nitrogen. An initial charge of monomer emulsion consisting of 34 gm deionized water, 0.32 g Alipal CO-436, 52 g butyl acrylate, 46.6 g methyl methacrylate and 1.4 g methacrylic acid is added to the kettle followed by 5 g sodium persulfate dissolved in 50g deionized water. This initial charge is allowed to react for fifteen minutes. Following this, a monomer emulsion consisting of 406 g deionized water, 7.6 g Alipal CO-436, 55 g butyl acrylate, 604.9 g methyl methacrylate, 440 g methacrylic acid and 5.5 g 1,3-butanediol dimethacrylate is added over a period of three hours at 85°C. After completion of monomer feed the charge is held at 85°C for one-half hour and then cooled to room temperature. It is then filtered to remove coagulum. The final dispersion is 30.0% solids, has a pH of 2-3 and an average particle diameter of 150 nanometers as determined by Nanosizer particle size analyzer (Coulter Electronics Ltd.).

B. Lobes

To a reactor like the one used in Part A of this example is charged 600 g deionized water and the kettle charge is heated to 80°C while being flushed with nitrogen. When the temperature has levelled off at 80°C an initial catalyst system consisting of 1.5 g 1% $FeSO_4 \cdot 7\ H_2O$ solution, 10.5 g of 4.2% sodium persulfate solution and 10.5 g of 4.2% sodium formaldehyde sulfoxylate solution in water is added. Almost immediately following, 118.3 g of the core dispersion from Part A is added. Following this, a monomer emulsion consisting of 351 g. deionized water, 29.0 g Alipal CO-436, 896.5 g butyl acrylate, 878.5 g methyl methacrylate and 17.9 g acrylic acid is added over a 2 hour 25 minute period. Concurrently, solutions of 4.1 g sodium persulfate and 1.7 g t-butyl hydroperoxide in 165 g deionized water and 3.4 g sodium bisulfite in 165 g deionized water are fed to the kettle. The temperature is maintained at 80°C. After completion of the feeds the product is cooled to room temperature. 0.82 g t-butyl hydroperoxide in 7 g deionized water and 0.4 g sodium hydrosulfite in 12 g deionized water are added during the cooling period. The product is at 56% solids and pH 2.0. The particle diameter, calculated for a spherical dispersion product, should be 0.56 $\mu$m (microns). Upon optical microscope examination, the actual particles of this product (especially after neutralization with $NH_4OH$ to pH 9.0) appear not to be spherical but to have two or more lobes per particle and are thus particles of the present invention. The particle of the present invention is larger in appearance than a spherical particle dispersion of 0.56 $\mu$m (micron) diameter.

C. Paint

The product of part B of this example is made into a paint (40 pigment volume concentration and 40% volume solids) as in Tables 5 and 6 below and compared in the formulation shown in Table 4 below to a typical commercial high film build acrylic exterior paint vehicle. The product of part B (3 parts) was blended with one part of the small particle size conventional, spherical particles produced in Example 11, infra, and compared in the same paint formulation.

Table 4

| Polymer Dispersion | 24 hr. Equilibrated Paint Properties | | |
|---|---|---|---|
| | pH | ICl[1] | Build[2] |
| Comparative | 9.2 | 1.30 | 13.3 |
| Invention (blend) | 8.9 | 1.45 | 14.2 |
| Invention (alone) | - | 1.65 | - |

[1] Viscosity at high shear (10,000 reciprocal seconds) in poise as measured by a cone and plate viscometer developed by Imperial Chemical Industries.
[2] Film build in grams wet paint per square foot.

Table 5

| Grind | (lbs.) Kg |
|---|---|
| Water | (94.8) 43 |
| Pigment Dispersant (25% in $H_2O$) | (14.6) 6.6 |
| Wetting Aid (alkaryl polyether) | (2.5) 1.13 |
| Defoamer | (1.5) 0.68 |
| Ethylene Glycol | (25.1) 11.38 |
| $TiO_2$, Rutile | (243.8) 110.6 |
| Talc | (198.8) 90.2 |

The above materials are ground on a Cowles Dissolver at 3800-4500 rpm for 20 minutes and let down at a slower speed with the following:-

| | (lbs) Kg |
|---|---|
| Latex (50% solids) | (448.6) 203.5 |
| Defoamer | (1.0) 0.45 |
| Preservative | (1.0) 0.45 |
| Coalescent[1] | (11.2) 5.1 |
| Propylene Glycol | (34.1) 15.5 |
| $H_2O$ | (11.2) 5.1 |
| Hydroxyethyl Cellulose Solution (2.5% in $H_2O$) | (82.2) 37.3 |
| | (1170.4) 530.9 |

[1] 2,2,4-trimethyl pentane diol-1,3-monoisobutyrate.

Example 2 - Sequentially-Produced Polymer Particle Paint Vehicle

Preparation of Particles of the present invention

To a reactor like the one used in part A of Example 1 is charged 500 g deionized water and the kettle charge is heated to 80°C while being flushed with nitrogen. When the temperature has levelled off at 80°C an initial catalyst system consisting of 1.5 g 1% $FeSO_4 \cdot 7 H_2O$ solution, 10.5 g of 4.2% sodium persulfate solution and 10.5 g of 4.2% sodium formaldehyde sulfoxylate solution in water is added. Almost immediately following, 88.7 g of the core dispersion from part A of Example 1 is added. A monomer emulsion consisting of 300 g deionized water, 29 g Alipal CO-436, 896.5 g butyl acrylate, 878.5 g methyl methacrylate and 17.9 g acrylic acid is added over a 2 hour 35 minute period. Concurrently, a solution of 4.1 g sodium persulfate and 1.7 g t-butyl hydroperoxide in 165 g deionized water and 3.4 g sodium bisulfite in 165 g deionized water are fed to the kettle. The temperature is maintained at 80°C. After completion of the feeds the product is cooled to room temperature. A portion of the cofeed catalyst solution is added

10

during the cooling stage to complete polymerization. The product is at 58.8% solids and pH 2.1. The calculated particle size of the product dispersion is 0.61 $\mu$m. By optical microscopic examination the particles of this dispersion appear as larger than expected for a 0.61 $\mu$m spherical dispersion and larger than the particles of Example 1, each particle being made up of two or more lobes with most of the particles having three lobes. When this product is made into a paint as in part C of Example 1 and compared to the standard paint vehicle, the paint with the vehicle of the invention gave an ICI of 3.7 compared to an ICI of 1.2 for the standard control.

Example 3 - Acid Content in Core Polymer

a. Preparation of Core of Hydrophilic Functional Copolymers on a Low Polarity Preform

Reactors: four 5 liter glass flasks with stirrer, thermometer, nitrogen inlet, reflux condenser and heating mantle.

The reactors are charged with 2080 gm deionized water and 3.2 g Siponate DS-4 and heated to 82°C while being flushed with nitrogen. An initial monomer charge of 6.9 g butyl acrylate, 75.5 g methyl methacrylate and 0.9 g methacrylic acid is added to each reactor. This is followed immediately with 5.5 g sodium persulfate in 30 g water.

Monomer emulsions as described below are prepared for four copolymer compositions.

## Table 7

| Sample | 3A-1 | 3A-2 | 3A-3 | 3A-4 |
|---|---|---|---|---|
| MAA Level | 10% | 20% | 30% | 40% |

### Monomer Emulsion g (Grams)

| | | | | |
|---|---|---|---|---|
| Deionized H$_2$O | 406 | 406 | 406 | 406 |
| Siponate DS-4 | 16 | 16 | 16 | 16 |
| Butyl Acrylate | 55.6 | 55.6 | 55.6 | 55.6 |
| Methyl Methacrylate | 944.4 | 834.2 | 722.9 | 611.7 |
| Methacrylic Acid | 112.2 | 222.4 | 333.4 | 444.9 |
| Butanediol Dimethacrylate | 33.3 | 33.3 | 33.3 | 33.3 |

When the initial charge has reacted (about 10 minutes) feed of the second monomer emulsion is started at about 6 g/minute. The temperature is maintained at 82°C. Thirty minutes into the reaction the feed rate is increased to about 14 g/minute. When the monomer feed is completed the reaction is allowed to cool to room temperature.

The solids level is 32.1% and the particle diameters are about. 0.18 $\mu$m (micron) by Nanosizer.

b. Preparation of Lobes to Show Effect of Copolymer Acid Content

Reactors: 5 liter glass flasks with stirrer, thermometer, nitrogen inlet, reflux condenser and heating mantle.

Four emulsion polymerization preparations of second stage polymer on the cores generated in 3A-1, -2, -3 and -4 are carried out in the following manner. A monomer emulsion consisting of the following is prepared for each.

Table 9

| Deionized water | 600 g. |
|---|---|
| Alipal Co-436 | 15 g. |
| Butyl Acrylate | 915 g. |
| Methyl Methacrylate | 826 g. |
| Acrylic Acid | 23.2 g. |

The reactors are charged with 500 g deionized water and 44 g each of the core dispersions 3A-1 to 3A-4. After flushing the reactor with nitrogen and with the reactor charge at 85°C the following initial initiator solutions are added to each of the reactors.

Table 10

| Sodium Persulfate | 0.5 g in 10 g $H_2O$ |
|---|---|
| Sodium Sulfoxylate Formaldehyde | 0.5 g in 10 g $H_2O$ |
| $FeSO_4 \cdot 7 H_2O$ solution (0.1%) | 15 g |

Cofeed initiator solutions have also been prepared for each.

Table 11

| Sodium Persulfate | 4.1 g in 54 g $H_2O$ |
|---|---|
| Sodium Bisulfite | 3.4 g in 54 g $H_2O$ |

Shortly after addition of the initial initiator solution slow feed of the monomer emulsion is begun. Feed of the cofeed catalyst solutions is also begun and programmed to continue during feed of the monomer emulsion. The temperature is maintained at 85°C. After 20 minutes the feed rate of the monomer emulsion is increased so as to complete feed in 165 minutes. After completion the dispersions are slowly cooled. The solids level of all the samples 3B-1 to 3B-4 is 58%.

Samples of the dispersions 3B-1 to 3B-4 are diluted to about 1% concentration with water and examined with an optical microscope using a visual magnification of 1000X. The following particle shapes are observed.

Table 12

| Sample | Seed Acid Level | Particle Shape |
|---|---|---|
| 3B-1 | 10% | Sphere |
| 3B-2 | 20% | Most spheres 10% doublets |
| 3B-3 | 30% | Mostly triplets and quadruplets |
| 3B-4 | 40% | Mostly triplets and quadruplets |

The diameter of the spherical particles is about 0.88 $\mu$m. The diameter of each of the lobes of a triplet is about 0.61 $\mu$m.

Example 4 Particle Dispersion and Blend

a. Reactor: five liter glass flask equipped for emulsion polymerization.

A monomer emulsion consisting of the following is prepared.

| Deionized Water | 545 g |
|---|---|
| Alipal Co-436 | 14.9 g |
| Butyl Acrylate | 914 g |
| Methyl Methacrylate | 826 g |
| Acrylic Acid | 23.4 g |

The reactor is charged with 600 g deionized water and heated to 85°C under a nitrogen atmosphere. An initial initiator charge of 20 ml 0.1% $FeSO_4 \cdot 7 H_2O$ and 1 gm sodium sulfoxylate formaldehyde is added followed two minutes later by 46.6 g core dispersion from part A-4 of Example 3 rinsed in with 10 ml water, followed by addition of cofeed initiator solutions, 5 g ammonium persulfate in 62 g water and 3.4 g sodium bisulfite in 62 g water. Initiator addition rate is adjusted so as to complete addition in about 4 hours. Within 10 minutes feed of the monomer emulsion at 5 gm/minute is begun. Thirty minutes after start of monomer emulsion feed an additional 7.5 g Alipal CO-436 is added to the monomer emulsion and mixed well. In thirty more minutes monomer emulsion feed rate is increased to 15 g/minute. The reaction temperature is maintained at 80-82°C. When the monomer emulsion feed is completed, the initiator solution is continued until finished. Temperature is held 22 minutes and then allowed to cool. The solids level of the dispersion is 55.7%. The particle size determined by nanosizer is 750 nanometers and the particles of the present invention were observed to have 3, 4 or 5 lobes.

This dispersion viscosity is 50 cps. Under this condition sediment formation will be rapid. However, if this dispersion is neutralized to pH levels above 8.5 the viscosity, especially the high shear viscosity, would increase excessively.

To provide pourable dispersions at high pH and to reduce the tendency to sedimentation the particles are mixed, i.e., blended, with an equal amount, on a solids basis, of all acrylic, emulsion-produced, 60% solids, all spherical particle dispersion which had already been neutralized to a pH of 9.2 ("Standard Dispersion"). The resultant 57.3% solids mixture had a pH of 6.3 and a viscosity of 840 cps. This was adjusted with $NH_4OH$ to a pH of 9.0 and the viscosity increased to 1340 cps. Blending the particle dispersion gave a dispersion blend which exhibits markedly improved film build in paints over the standard spherical dispersion alone.

b. Comparison in Paints

Paints were prepared of the product of this example and compared with paints made with a control vehicle and with the standard dispersion. These were in a 40 PVC, 38% VS formulation.

Table 13

| Material | Paint ICI | Paint Film Build |
|---|---|---|
| Control Vehicle | 1.35 | 9.9 |
| Standard Dispersion | 0.80 | 8.3 |
| Particles of this Example | 3.00 | 16.5 |
| Blend: 1 Part Particles of this Example with 1 Part Standard Dispersion | 1.53 | 10.6 |

The control vehicle is an acrylic exterior paint vehicle which has good film build.

## Table 14

### Formulation, Flat Paint, 40 PVC, 38% VS.

#### Grind

| Material | Lbs. | Kg |
|---|---|---|
| Hydroxyethyl Cellulose, 2.5% Solution in Water | (75.0) | 34. |
| Pigment Dispersant (25% Solids) | (11.3) | 5.13 |
| Water | (60.0) | 27.2 |
| Defoamer | (1.0) | 0.45 |
| Wetting Aid, Alkylaryl Polyether | (2.4) | 1.09 |
| Ethylen Glycol | (23.2) | 10.5 |
| Titanium Dioxide, Rutile | (234.4) | 106.3 |
| Aluminum Silicate | (171.6) | 77.8 |
| Silicate | (5.0) | 2.27 |

#### Letdown

| | Lbs. | Kg |
|---|---|---|
| Polymer Dispersion, as 52.5% Solids | (405.9) | 184.1 |
| Water | (15.0) | 6.8 |
| Preservative | (9.0) | 4.08 |
| Defoamer | (1.0) | 0.45 |
| Coalescent | (10.6) | 4.8 |
| Propylene Glycol | (32.4) | 14.7 |
| Hydroxyethyl Cellulose, 2.5% Solution in Water | (87.1) | 39.5 |

Example 5 - Particles of the Invention with Different Core Polymers

A. Preparation of Core Dispersions of Hydrophilic Functional Copolymers

The equipment and procedure of Example 3A is used to prepare core dispersions on 6.7% of a low polarity preform of the following compositions:

Table 15

| | |
|---|---|
| 1. | 5 BA/55 MMA/40 HEMA + 3% butanediol dimethacrylate |
| 2. | 5 BA/75 MMA/20 HEMA + 1% butanediol dimethacrylate |
| 3. | 5 BA/55 MMA/20 MAA/20 HEMA + 1% butanediol dimethacrylate |
| 4. | 5 BA/65 MMA/20 MAA/10 AM + 3% butanediol dimethacrylate |
| 5. | 5 BA/65 MMA/30 AA + 3% butanediol dimethacrylate |

Compositions of the appropriate monomer emulsion are as follows, weights are in grams.

Table 16

|  | 1 | 2 | 3 | 4 | 5 |
|---|---|---|---|---|---|
| Deionized Water | 406 | 406 | 406 | 406 | 406 |
| Siponate DS-4 | 16 | 16 | 16 | 16 | 16 |
| Butyl Acrylate (BA) | 55.6 | 55.6 | 55.6 | 55.6 | 55.6 |
| Methyl Methacrylate (MMA) | 611.2 | 833.4 | 611.2 | 722.3 | 722.3 |
| Hydroxyethyl Methacrylate (HEMA) | 444.5 | 222.2 | 222.4 | -- | -- |
| Acrylamide (AM) | -- | -- | -- | 111.1 | -- |
| Acrylic Acid (AA) | -- | -- | -- | -- | 333.4 |
| Methacrylic Acid (MAA) | -- | -- | 222.4 | 222.4 | -- |
| Butanediol Dimethacrylate | 33.3 | 11.1 | 11.1 | 33.3 | 33.3 |

The solids levels of the five dispersions thus prepared are all about 32.1% and the particle diameters are about 0.18 $\mu$m by Nanosizer.

B. Preparation of Second Stage Particles with Core Dispersions 5A-1 Through 5A-5

The same procedures and compositions used in 3B were carried out with 5A-1 through -5 as cores. The following results were obtained.

Table 17

| Core | Particle Description |
|---|---|
| 5A-1 | 85% triplets and quadruplets |
| 5A-2 | most spheres |
| 5A-3 | 85% particles of the invention |
| 5A-4 | 95% particles of the invention |
| 5A-5 | 10% triplets, 40% doublets |

Table 18

| Comparison in Paints | | I.C.I. | Build |
|---|---|---|---|
| 1. | Control Vehicle (50% Solids) | 1.25 | 10.0 |
| 2. | Standard Dispersion (59% Solids) | 0.8 | 8.3 |
| 3. | Blend 1 Part Particles of EX 5B Using 5A-1 1st Stage (55% Solids) With 1 Part Standard Dispersion | 1.0 | 9.1 |
| 4. | Blend 1 Part Particles of Ex 5B Using 5A-3 1st Stage With 1 Part Standard Dispersion | 1.2 | 10.5 |

The paint formulations, control vehicle and standard dispersion are described in Example 4.

Example 6 - Particles of the Invention with Polyvinyl Acetate Seed

a. Preparation of Seed Polymer Dispersion

A two liter flask equipped with a stirrer, thermometer, reflux condenser and means for temperature control and nitrogen atmosphere is used. An initial charge of 397 g deionized water and 0.24 g sodium dodecylbenzene sulfonate is heated to a temperature of 78°C under a nitrogen atmosphere with stirring. A monomer emulsion is prepared from 196 g deionized water, 0.22 g sodium dodecyl benzene sulfonate, 208 g butyl acrylate, 186.8 g methylmethacrylate and 5.21 g methacrylic acid. 20.8 g of this monomer is added

15

to the initial charge and then followed by 1.7 g sodium persulfate dissolved in 10 g water. Fifteen minutes later, a gradual feed of the monomer emulsion is begun and continued so as to be completed in 1½ hours. The temperature is allowed to rise to 85°C and maintained there. Fifteen minutes after monomer addition is complete the reaction mixture is cooled. 0.5 g aqua ammonia is added to improve stability. The product is 40% solids and has a particle size of 0.15, μm by

b. <u>Reactor</u>: 2 liter glass flask with stirrer, thermometer, nitrogen inlet and reflux condenser.

The reactor is charged with 248 g deionized water and heated to 70°C while sweeping nitrogen through the flask. When the reactor temperature levels off at 70°C the following are charged:

Table 19

| | |
|---|---|
| 0.4 ml | 1% $FeSO_4 \cdot 7H_2O$ solution |
| 0.12 g | ammonium persulfate |
| 0.12 g | sodium sulfoxylate formaldehyde |
| 14.7 g | of a 40% solids seed polymer dispersion as prepared in 6A |
| 0.47 g | glacial acetic acid |

Approximately 11 g water is used to rinse in the above where needed.
As soon as possible a feed of monomer emulsion A as described below is begun.

Table 20

| Monomer Emulsion A | |
|---|---|
| Deionized Water | 26 g |
| Triethanolamine salt of dodecylbenzene sulfonic acid, 60% active | 0.65 g |
| Octylphenoxy polyethylene oxy ethanol (70%) | 0.75 g |
| Sodium Acetate | 0.09 g |
| Vinyl Acetate | 98.1 g |

Simultaneously, feeds of free radical initiating solutions, 1.12 g ammonium persulfate and 0.47 g t-butyl hydroperoxide in 45 g water and 0.94 g sodium bisulfite in 46 g water is begun and continued throughout the reaction. Feed monomer emulsion A over a period of thirty minutes while maintaining the temperature at 70°C. When A is completed, then feed monomer emulsion B over a period of 2½ hours with the temperature at 75°C.

Table 21

| Monomer Emulsion B | |
|---|---|
| Deionized Water | 102 g |
| Triethanolamine salt of dodecylbenzene sulfonic acid, 60% active | 2.6 g |
| Octylphenoxy polyethylene oxy ethanol (70%) | 3.0 g |
| Sodium Acetate | 0.38 g |
| Vinyl Acetate | 98.1 g |
| Butyl Acrylate | 157 g |
| Methyl Methacrylate | 137.4 g |

Adjust feed of the free radical initiators so that they continue for 20 minutes after monomer feed is completed. Upon completion of polymerization allow the product to cool to 50°C and add the following:
0.22 g t-butylhydroperoxide in 2 g $H_2O$ followed by 0.11 g Lykopon in 4 g $H_2O$. Cool another hour and add a neutralizer of 1.12 g aqua ammonia.
The solids is 49.1%, the particle diameter is about 0.55 μm and the particles are of the invention.

16

Example 7 - Acrylic Particles of the Invention with Polyvinyl Acetate Seed

a. Preparation of an Acrylic Particle based on a Polyvinyl Acetate Core

Monomer emulsions 1 and 2 are prepared as follows:

| | M.E. 1 | M.E. 2 |
|---|---|---|
| Deionized $H_2O$ | 45 g | 304.5 g |
| Triethanolamine salt of dodecylbenzene sulfonic acid, 60% active sulfonic acid, 60% active | 1.2 g | 10.75 g |
| Octylphenoxy polyethylene oxy ethanol (70%) | 1.38 g | 12.44 g |
| Sodium Acetate | 0.17 g | 1.55 g |
| Vinyl Acetate | 179.3 g | - |
| Butyl Acrylate | - | 839.1 g |
| Methyl Methacrylate - | | 753.6 g |
| Acrylic Acid | - | 21.0 g |

Catalyst solution are 1.72 g t-butyl hydroperoxide + 4.09 g ammonium persulfate in 166 g deionized water and 3.43 g sodium bisulfite in 168 g deionized water.

In a five liter glass flask equipped for emulsion polymerization a charge of 895 g deionized water and 53.8 g of seed polymer dispersion from Example 6A is heated to 72°C while stirring under a nitrogen atmosphere. 15 gm of a 0.1% $FeSO_4 \cdot 7 H_2O$ aqueous solution, 0.44 g ammonium persulfate in 10 g water, 0.44 g sodium sulfoxylate formaldehyde in 10 g water and 1.72 g acetic acid in 10 gm water are added. Three minutes after, addition of monomer emulsion 1 is started at a rate such that it will be completed in 20 minutes. Addition of the catalysts is carried out concurrently. The temperature is maintained at 70-75°C. Upon completion of monomer emulsion 1 addition of monomer emulsion 2 is started and continued such that it will be completed in two hours and twenty minutes. Addition of the catalysts is continued. When addition of the monomer emulsion is completed addition of the cofeed catalyst 2 is continued until they are completed -- about ten minutes more. The product is allowed to cool to 35°C at which time it is neutralized with aqua ammonia. The solids level was 51.4%. Microscope observation showed the particles to be assymetric with a core and at least two lobes structure.

Example 8

a. Preparation of 1 $\mu$m (Micron) Core Polymer Dispersion

Reactor: five liter glass flask with stirrer, thermometer, nitrogen inlet, reflux condenser and heating mantle.

The reactor is charged with 2400 g deionized water and heated to 85°C while being flushed with nitrogen. An initial charge of monomer emulsion consisting of 12 g deionized water, 0.058 g nonylphenoxy poly(ethyleneoxy) ethanol sulfate, ammonium salt, 5.2 g butyl acrylate, 46.4 g methyl methacrylate and 1.4 g methacrylic acid is added to the kettle followed by 5 g sodium persulfate dissolved in 50 g deionized water. This initial charge is allowed to react for fifteen minutes and then a monomer emulsion consisting of 330 g deionized water, 1.1g nonylphenoxy poly(ethyleneoxy) ethanol sulfate, ammonium salt, 55 g butyl acrylate, 605 g methyl methacrylate and 440 g methacrylic acid is added over a period of three hours with the temperature maintained at 83°C. After completion, the charge is held at 83°C for one half hour and then cooled to room temperature. It is filtered to remove any coagulum. The final dispersion is 31.8% solids, has a pH of about 2 and a particle diameter of 0.45 $\mu$m.

In similar equipment and under similar initial conditions 157 g of the above product is added to a kettle charge of 2400 g deionized water containing 2.5 gm sodium persulfate at 83°C. To this charge is gradually added a solution of 27.5 g butyl acrylate, 302.5 g methyl methacrylate and 220 g methacrylic acid over a two hour period while keeping the temperature at 83°C. Upon completion of feed the reaction charge is stirred at 83°C for a half hour and then cooled and filtered. The total solids is 18.4% and the particle size is about 1.0 $\mu$m, relatively monodisperse with only a few particles of a second small mode.

b. Preparation of Large Particle Size Polystyrene Particles

Reactor: 2 liter glass flask with stirrer, thermometer, nitrogen inlet, reflux condenser and heating mantle.

The flask is charged with 500 g deionized water and heated to 85°C while stirring under a nitrogen atmosphere. After levelling at 85°C -124 g of the core dispersion from part A of this example is added. A monomer emulsion as follows has previously been prepared.

Table 22

| Deionized Water | 100 g |
|---|---|
| Alipal EP-110 | 2.0 g |
| Styrene | 297 g |
| Allylmethacrylate | 3.0 g |
| Benzoyl Peroxide | 3.0 g |

The monomer emulsion is fed slowly over a five hour period with the temperature maintained at 85°C. When the reaction is completed the solids level is found to be 21.3%. The particles are of about 2 $\mu$m diameter and have four to six or more lobes. When the dispersion is neutralized (after further dilution) and examined under a microscope, the particles are seen to be much enlarged with the lobes extended.

A portion of the above dispersion is further grown out as follows.

Using the same equipment, charge 500 g deionized water and 281.7 g of the above dispersion and heat to 85°C. A monomer emulsion is prepared as follows:

Table 23

| Deionized Water | 110 g |
|---|---|
| Alipal EP-110 | 1.6 g |
| Styrene | 240 g |
| Benzoyl Peroxide | 2.4 g |

With the water-core dispersion at 85°C under a nitrogen atmosphere the monomer emulsion is slowly fed over a two and one half hour period while maintaining slow agitation. At the end of this time about 3/4 of the monomer emulsion has been fed. Examination of a sample showed that the starting material has increased in size with growth of the lobes and very few new particles have formed with almost all of the growth occurring on the starting material. Monomer emulsion feed is continued for another hour to completion. The particles have further increased in size but some of the lobes have fused so that most of the particles have only two or three lobes. Solids of the final sample is 24.5%.

Example 9 - Particles with an Acrylate Core

a. Preparation of Core with Acrylic Acid

Reactor: five liter glass flask with stirrer, thermometer, nitrogen, inlet, reflux condenser and heating mantle.

A monomer emulsion is prepared from the following ingredients.

Table 24

| Deionized Water | 242 g |
|---|---|
| Alipal CO-436 | 10.0 g |
| Butyl Acrylate | 58.1 g |
| Methyl Acrylate | 984.7 g |
| Acetic Acid | 0.8 g |
| Sodium Vinyl Sulfonate (25%) | 11.6 g |

Sixty three grams of the above emulsion is removed and set aside for use as an initial charge. Then 116.2 g acrylic acid is added to the above monomer emulsion and rendered homogeneous.

A kettle charge of 2250 g deionized water is heated to 80°C while stirring under nitrogen. The initial charge monomer emulsion (63 g) is added to the kettle followed shortly by 0.6 g acetic acid, 40 ml of 0.1% $FeSO_4 \cdot 7 H_2O$ solution, 0.2 g ammonium persulfate in 10 g water. Ten minutes later slow feed of the monomer emulsion is begun and simultaneously feeds of 1.2 g ammonium persulfate and 1.7 g t-butylhydroperoxide in 45 ml water and of 1.9 g sodium bisulfite in 74 ml water are begun. The feed rates are adjusted so the monomer feed is completed in three hours and the cofeeds 15 minutes later. The dispersion is cooled and filtered. Sixteen g wet gum is removed. Solids of the dispersion is 30%, pH is 2.5 and the particle diameter by Nanosizer is 154 nanometers.

b. Preparation of Particles with Acrylic Acid Functional Core

A two liter glass reactor suitable for emulsion polymerization is used. A monomer emulsion of the following is prepared.

Table 25

| Deionized Water | 140 g |
|---|---|
| Alipal CO-436 | 5.0 g |
| Butyl Acrylate | 278 g |
| Methyl Methacrylate | 274.3 g |
| Acrylic Acid | 7.52 g |

The reactor is charged with 219.5 g deionized water and heated to 85°C under nitrogen. 1.63 g ammonium persulfate in 4 g water is added followed by 29.4 g of the core dispersion prepared in part A of this example. Slow feed of the monomer emulsion is begun and the feed rate adjusted so as to be completed in 210 minutes. After approximately 17% of the monomer emulsion has been added an additional 5 gm Alipal CO-436 and a solution of 0.8 g aqua ammonia is added to the monomer emulsion and agitated until homogeneous. The temperature is maintained at between 80°C and 85°C. After completion of the feed the dispersion is allowed to cool slowly and while cooling an increment of 0.1 g t-butyl hydroperoxide in 3 g water followed by 0.06 g sodium sulfoxylate formaldehyde in 3 g water are added. The solids level was 59%. Microscope observation showed the product to be of the invention with lobes of about 0.55 $\mu$m

c. Effect of Surfactant and Initiator Distribution on Particle Formation

The procedure of part B of this example is repeated with these changes.
1. Only 0.58 g Alipal CO-436 is added to the initial monomer emulsion.
2. 9.4 g Alipal CO-436 is added to the monomer emulsion after 17% has been fed.
3. Only 0.47 g ammonium persulfate is added to the reactor initially.
4. A solution of 1.1 g ammonium persulfate in 60 g water is added concurrently with the monomer emulsion feed.

The solids level of this dispersion was 59.4%. Microscope examination showed that the dispersion was mainly single spherical appearing particles with perhaps a few doublets. Particle diameter by Nanosizer was 600 nanometers. Changing the surfactant and initiator distribution greatly reduced or eliminated the particles with at least 2 lobes formation.

Example 10 - (Comparative) Using Low Surfactant Level

The procedure of Example 3A-4 is used to prepare core particles and Example 3B, except using only 3 g Alipal CO-436 surfactant, is used to prepare the dispersions. Only 25% of the particles are doublets, with the balance being spherical.

Example 11

a. Small Particle Emulsion Polymer

Reactor: five liter glass flask with stirrer, thermometer, nitrogen inlet, reflux condenser and heating mantle.

The flask is charged with 1350 g deionized water and heated to 82°C while stirring under nitrogen. A monomer emulsion is prepared as follows:

Table 26

| Deionized Water | 650 g |
|---|---|
| Alipal CO-436 | 3 g |
| Butyl Acrylate | 704 g |
| Methyl Methacrylate | 632 g |
| Acrylic Acid | 17.6 g |

With the reactor water temperature at 82°C, 241 g Alipal CO-436, 4.2 g sodium carbonate and 4.9 g sodium persulfate are added to the reactor. With the reactor charge temperature at 82° feed of the monomer emulsion is begun at 3 g/minute. Twenty minutes later the feed rate is increased to 6 g/minute and again in twenty more minutes to 12 g/minute. The temperature is maintained at 82° and the reaction is completed in 3 hours. The solids level is 41% and particle diameter is estimated to be 42 nanometers.

Example 12 - Particles for Adhesive

a. Core Dispersion

The procedure of Example 1A but using the ingredients listed below is used to prepare a core polymer dispersion.

## Table 27

### Kettle Charge

| | |
|---|---|
| Deionized Water | 2400 g |
| Siponate DS-4 | 11.2 g |
| Sodium Persulfate | 5.5 g |

### Initial Charge Monomer Emulsion

| | |
|---|---|
| Deionized Water | 28 g |
| Siponate DS-4 | 3.9 g |
| Butyl Acrylate | 6.9 g |
| Methyl Methacrylate | 75.5 g |
| Methacrylic Acid | 0.9 g |

### Feed Monomer Emulsion

| | |
|---|---|
| Deionized Water | 406 g |
| Siponate DS-4 | 16 g |
| Butyl Acrylate | 55.6 g |
| Methyl Methacrylate | 611 g |
| Methacrylic Acid | 444.6 g |
| 1,3-Butylene dimethacrylate | 33.3 g |

The resultant solids level was 30.4% and the particle size was 107 nanometers.

b. Particle Preparation

The procedure and materials of Example 5B with the following charges are used to make an emulsion polymer of the present invention.

Changes:

1. The following monomer emulsion is used.

| | |
|---|---|
| Deionized Water | 600 g |
| Alipal CO-436 | 46 g |
| Butyl Acrylate | 1676.1 g |
| Methyl Methacrylate | 65.3 g |
| Acrylic Acid | 23.0 g |

2. For the central core use 44 g of the 107 nanometer dispersion from part A of this example.

The final solids level was 55.0% and the particles were seen to be mostly triplets. Particle diameter was estimated to be 0.54 $\mu$m equivalent sphere basis.

This product, either as is or diluted and neutralized, is useful as an adhesive.

21

### Example 13

a. Particles with 80% Polystyrene Lobes

Reactor: A five liter glass flask equipped for emulsion polymerization. Two monomer emulsions consisting of the following are prepared.

### Table 28

**Monomer Emulsion A**

| | |
|---|---|
| Deionized Water | 120 g |
| Alipal CO-436 | 4.4 g |
| Butyl Acrylate | 183 g |
| Methyl Methacrylate | 165.2 g |
| Acrylic Acid | 4.6 g |

**Monomer Emulsion B**

| | |
|---|---|
| Deionized Water | 540 g |
| Alipal CO-436 | 23.8 g |
| Styrene | 1384 g |

A charge of 100 g deionized water is heated to 82°C under a nitrogen atmosphere. An initial initiator charge of 20 g 0.1% $FeSO_4 \cdot 7 H_2O$ solution and 1.0 g sodium sulfoxylate formaldehyde in 10 g water are added to the charge followed by 42.8 g of the dispersion from Example 3A-4. Addition of two initiator solutions (3.3 g ammonium persulfate in 42 gm water and 2.3 gm sodium bisulfite in 42 g water) is begun. Ten minutes later, feed of monomer emulsion A is begun at 5 g/minute. Thirty minutes later the feed rate is increased to 15 g/minute. The temperature is maintained at 82°C. When monomer emulsion A has been added feed of monomer emulsion B is begun at 5 g/minute. The initiator solutions used for A are discontinued and addition of another initiator solution, 4.8 g ammonium persulfate in 84 ml deionized water is begun. Ten minutes later the monomer emulsion feed is increased to 15 g/minute and the temperature is increased to 85°C. Addition of this monomer emulsion is continued for 2 hours and 10 minutes more and at this time it is completed. Addition of initiator is continued for 20 minutes more at 85°C. Following this it is allowed to cool slowly while stirring.
Solids level is 47.5%.
Particle diameter - about 0.88 $\mu$m.
Particle geometry - >95% four lobes.

### Example 14 - 0.50 $\mu$ (Micron) Particles

The following procedure of Example 3B but with the following materials is used to prepare a particle dispersion.

## Table 29

**Monomer Emulsion**

| | |
|---|---|
| Deionized Water | 523.6 g |
| Alipal CO-436 | 15.1 g |
| Acrylic Acid | 23.3 g |
| Butyl Acrylate | 930 g |
| Methyl Methacrylate | 829 g |

**Kettle Water Charge** ........................ 572 g

**Initial Catalyst**

| | |
|---|---|
| $FeSO_4 \cdot 7 H_2O$, 1% $H_2O$ Solution | 20 g |
| Sodium Sulfoxylate Formaldehyde Solution (5%) | 20 g |

**Cofeed Catalyst**

| | |
|---|---|
| Ammonium Persulfate | 10 g |
| Water for Solutions | 126 g |
| Sodium Bisulfite | 6.8 g |
| Water for Solutions | 126 g |
| Core from Example 12A | 47.5 g |

Proceed with the polymerization as in Example 3B with an initial monomer emulsion feed rate of 5 g/minute. After 30 minutes of feed add 7.5 g Alipal CO-436 in 25 g water to the monomer emulsion and mix well. Following this increase monomer emulsion feed to 10 g/minute and one hour later increase it to 15 g/minute. The monomer feed should be completed in 245 minutes.

After cooling and filtering the solids level is 55.6% and the particle size is 0.50 μm spherical equivalent. The particles are about 60% triplets and quadruplets with about 30% doublets and the rest spheres.

Example 15 - Comparative Spherical Particle Dispersions

Spherical polymer particle dispersions for comparative purposes were prepared by a procedure similar to that of Example 1B with the following changes.

23

## Table 31

**Monomer Emulsion**

| | |
|---|---|
| Deionized Water | 600 g |
| Alipal CO-436 | 3.35 g |
| Butyl Acrylate | 1006.5 g |
| Methyl Methacrylate | 908.6 g |
| Acrylic Acid | 25.7 g |

| | |
|---|---|
| Kettle Water Charge | 663 g |

**Initial Catalyst**

| | |
|---|---|
| $FeSO_4 \cdot 7\ H_2O$ (1% Solution) | 1.5 g |
| Ammonium Persulfate | 0.5 g |
| Sodium Bisulfite | 0.5 g |

**Cofeed Catalyst**

| | |
|---|---|
| Ammonium Persulfate/$H_2O$ | 5.5 g /100 g |
| Sodium Bisulfite/$H_2O$ | 3.8 g /100 g |

To carry out the procedure the kettle water charge is heated to 60°C, a polymer seed is charged followed by the initial catalyst and subsequently by the monomer emulsion feed and catalyst cofeed. The reaction temperature is maintained at 60°C.

Three polymer dispersions are prepared with three different seed charges. The seed used is that which has been prepared in Example 6A.

## Table 32

### Final Dispersion

| | A | B | C |
|---|---|---|---|
| Seed Charge | 16.4 | 38.8 | 30.6 |
| % Solids | 55.8 | 55.9 | 55.2 |
| Particle Diameter, μm | 0.90 | 0.70 | 0.77 |
| Viscosity, cps | 70 | 60 | 60 |

Example 16 - Comparison of Spherical and Sequentially-Produced Polymer Particle Dispersions in a 40 PVC, 38% VS Paint

Various polymer dispersions are evaluated in the paint described in Example 4. As can be seen from Table 33, the dispersion of the invention provides higher paint ICI and better film build than conventional spherical dispersions.

Table 33

| Polymer Dispersion | Paint ICI | Paint Film Build |
|---|---|---|
| A. Spherical from Example 15B, 0.70 $\mu$m (microns)(comparative) | 1.75 | 11.9 |
| B. Spherical from Example 15A, 0.90 $\mu$m (microns) (comparative) | 1.80 | 13.2 |
| C. Invention product of Example 4, volume equivalent to a 0.75 $\mu$m (micron) sphere | 3.00 | 16.5 |

The following terms used in the specification are trade marks;
Texanol; Alipal; Siponate; Dowfax; Nanosizer.

**Claims**

1. A sequentially produced polymer particle comprising a polymeric core having at least two polymeric lobes borne thereon, wherein the polymeric core has a composition which is different and thermodynamically incompatible with the composition of the polymeric lobes and wherein the polymeric core composition and the composition of the polymeric lobes have an interaction parameter $X_{C-L}$ with each other of equal to or greater than 0.05, and wherein the weight ratio of the total lobes to core is at least or greater than 1 and wherein the particle is obtainable by polymerising a lobe monomer system in the presence of a polymeric core particle and surfactant, and increasing the level of surfactant added with lobe forming monomer to just below the level at which new particles are initiated.

2. A particle as claimed in claim 1 wherein the core is a polymer which swells upon neutralization.

3. A particle as claimed in claim 1 or claim 2 wherein the core is polymerized from a core monomer system comprising carboxylic acid-functional unsaturated monomer.

4. A particle as claimed in any one of the preceding claims wherein the core is polymerized from a core monomer system comprising nonionic or non-functional monomers.

5. A particle as claimed in any one of the preceding claims wherein the weight ratio of polymeric core to total polymeric lobes is in the range of from 1:1 to 1:500, preferably 1:1 to 1:200 and more preferably 1:5 to 1:200.

6. A particle as claimed in any one of the preceding claims wherein the weight ratio of total polymeric lobes to polymeric core is greater than 1.

7. A particle as claimed in any one of the preceding claims wherein the polymeric core has a glass transition temperature of at least 5°C, more preferably at least 100°C.

8. A particle as claimed in any one of the preceding claims wherein the core is 0.05 to 1.5 $\mu$m.

9. An aqueous dispersion comprising particles as claimed in any one of the preceding claims admixed in water or an aqueous solution.

10. A process for preparing a polymer particle as defined in any one of the claims 1 to 8 comprising polymerising a lobe monomer system in the presence of a polymeric core particle and surfactant, and increasing the level of surfactant added with lobe forming monomer to just below the level at which new particles are initiated.

11. A process as claimed in claim 10 wherein at least 10%, more preferably at least 20%, and even more preferably at least 30% of the solids formed in the process are particles comprising a core bearing at least 2 lobes.

12. A process as claimed in claim 10 or claim 11 wherein the level of surfactant is from 0.1% to 5% by weight of total monomer.

13. Use of a polymer particle as claimed in any one of claims 1 to 8, or the aqueous dispersion as claimed in claim 9 or a particle formed by the process of any one of claims 10 to 12, in or as a binder, coating or adhesive composition.

**Patentansprüche**

1. Sequentiell hergestelltes Polymerteilchen, umfassend einen Polymerkern mit mindestens zwei darauf sitzenden Polymerlappen, worin der Polymerkern eine Zusammensetzung hat, die unterschiedlich zu und thermodynamisch unverträglich mit der Zusammensetzung der Polymerlappen ist und worin die Polymerkern-Zusammensetzung und die Zusammensetzung der Polymerlappen einen Wechselwirkungsparameter $X_{C-L}$ miteinander von gleich oder größer 0,05 haben, und worin das Gewichtsverhältnis der Gesamtlappen zum Kern mindestens 1 oder größer ist, und worin das Teilchen erhältlich ist, durch Polymerisierung eines Lappen-Monomersystems in Gegenwart eines Polymerkernteilchens und eines Tensids und durch Erhöhung der Tensidmenge, die mit dem Lappen-ausbildenden Monomer zugegeben worden ist, bis knapp unter die Menge, bei der neue Teilchen initiiert werden.

2. Teilchen nach Anspruch 1, worin der Kern ein Polymer ist, das bei Neutralisation quillt.

3. Teilchen nach Anspruch 1 oder 2, worin der Kern von einem Kern-Monomersystem polymerisiert wird, das ein Carbonsäure-funktionelles ungesättigtes Monomer umfaßt.

4. Teilchen nach einem der vorhergehenden Ansprüche, worin der Kern von einem Kern-Monomersystem polymerisiert wird, das nicht-ionische oder nicht-funktionelle Monomere umfaßt.

5. Teilchen nach einem der vorhergehenden Ansprüche, worin das Gewichtsverhältnis des Polymerkerns zu den Gesamt-Polymerlappen im Bereich von 1:1 bis 1:500, vorzugsweise 1:1 bis 1:200 und besonders bevorzugt 1:5 bis 1:200 liegt.

6. Teilchen nach einem der vorhergehenden Ansprüche, worin das Gewichtsverhältnis der Gesamt-Polymerlappen zu dem Polymerkern größer als 1 ist.

7. Teilchen nach einem der vorhergehenden Ansprüche, worin der Polymerkern eine Glasumwandlungstemperatur von mindestens 5 °C, besonders bevorzugt von mindestens 100 °C hat.

8. Teilchen nach einem der vorhergehenden Ansprüche, worin der Kern 0,05 bis 1,5 $\mu$m ist.

9. Wäßrige Dispersion, umfassend Teilchen nach einem der vorhergehenden Ansprüche, gemischt in Wasser oder einer wäßrigen Lösung.

10. Verfahren zur Herstellung eines Polymerteilchens nach einem der Ansprüche 1 bis 8, umfassend die Polymerisierung eines Lappen-Monomersystems in Gegenwart eines Polymerkernteilchens und eines Tensids und die Erhöhung der Menge des Tensids, die mit dem Lappen-ausbildenden Monomer zugegeben worden ist, bis knapp unter die Menge, bei der neue Teilchen initiiert werden.

11. Verfahren nach Anspruch 10, worin mindestens 10 %, besonders bevorzugt mindestens 20 % und ganz besonders bevorzugt mindestens 30 % der in dem Verfahren gebildeten Feststoffe Teilchen sind, die einen mindestens zwei Lappen tragenden Kern umfassen.

12. Verfahren nach Anspruch 10 oder 11, worin die Tensidmenge 0,1 bis 5 Gew.-% des Gesamtmonomers beträgt.

13. Verwendung eines Polymerteilchens nach einem der Ansprüche 1 bis 8 oder der wäßrigen Dispersion nach Anspruch 9 oder eines durch das Verfahren nach einem der Ansprüche 10 bis 12 gebildeten Teilchens in oder als Binde-, Beschichtungs- oder Klebstoffzusammensetzung.

**Revendications**

1. Particule polymère séquencée comprenant un noyau polymère portant au moins deux lobes polymères, dans laquelle le noyau polymère a une composition qui est différente et thermodynsmiquement incompatible avec la composition des lobes polymères, la composition du noyau polymère et la composition des lobes polymères ont un paramètre d'interaction mutuel $X_{N-L}$ qui est égal ou supérieur à 0,05, le rapport pondéral de la totalité des lobes au noyau est au moins égal ou supérieur à 1 et la particule peut être obtenue en polymérisant un système monomère formateur de lobes en présence d'une particule polymère formant noyau et d'un agent tensio-actif et en augmentant le niveau d'agent tensio-actif ajouté avec le monomère formateur de lobes jusque juste en dessous du niveau auquel de nouvelles particules seraient initiées.

2. Particule selon la revendication 1, dans laquelle le noyau est un polymère qui gonfle par neutralisation.

3. Particule selon la revendication 1 ou 2, dans laquelle le noyau est polymérisé à partir d'un système monomère de noyau comprenant un monomère insaturé à fonction acide carboxylique.

4. Particule selon l'une quelconque des revendications précédentes, dans laquelle le noyau est polymérisé à partir d'un système monomère de noyau comprenant des monomères non-ioniques ou non-fonctionnels.

5. Particule selon l'une quelconque des revendications précédentes, dans laquelle le rapport pondéral du noyau polymère a la totalité des lobes polymères se situe dans la plage de 1:1 à 1:500, de préférence de 1:1 à 1:200 et mieux encore de 1:5 à 1:200.

6. Particule selon l'une quelconque des revendications précédentes, dans laquelle le rapport pondéral de la totalité des lobes polymères au noyau polymère est supérieur à 1.

7. Particule selon l'une quelconque des revendications précédentes, dans la quelle le noyau polymère a une température de transition vitreuse d'au moins 5°C, mieux encore d'au moins 100°C.

8. Particule selon l'une quelconque des revendications précédentes, dans laquelle le noyau a un calibre de 0,05 à 1,5 micromètre.

9. Dispersion aqueuse comprenant des particules selon l'une quelconque des revendications précédentes en mélange avec de l'eau ou une solution aqueuse.

10. Procédé de préparation d'une particule polymère selon l'une quelconque des revendications 1 à 8 comprenant la polymérisation d'un système monomère formateur de lobes en présence d'une particule polymère formant noyau et d'un agent tensio-actif et l'augmentation du niveau d'agent tensio-actif ajouté avec le monomère formateur de lobes jusque juste en dessous du niveau auquel de nouvelles particules seraient initiées.

11. Procédé selon la revendication 10, dans lequel au moins 10 %, ou mieux encore au moins 20 %, et bien mieux encore au moins 30 % des solides formés au cours du procédé sont des particules comprenant un noyau portant au moins deux lobes.

12. Procédé selon la revendication 10 ou 11, dans lequel le niveau d'agent tensio-actif est de 0,1 % à 5 % en poids de la totalité du monomère.

13. Emploi d'une particule polymère selon l'une quelconque des revendications 1 à 8 ou de la dispersion aqueuse selon la revendication 9 ou d'une particule formée par le procédé selon l'une quelconque des revendications 10 à 12 dans une composition de liaison, de revêtement ou de collage ou à titre de composition de liaison, de revêtement ou de collage.

$3\mu$  Fig.1.  X2,300

$3\mu$  Fig.2.  X2,300

3μ                                    X2,300

Fig. 3.

Fig.4.

Fig.5.

Fig.6.

1 um    x 18,000   30 kV

1μm x 10,000 30 kV

*Fig. 7.*

*Fig.8.*

Fig.9.

B          OCOS
862992  60.0KV  X20.0K  200nm

Fig. 10.